# EUROPEAN PATENT APPLICATION

(11) **EP 4 667 814 A1**
(43) Date of publication of application: **24.12.2025**
(21) Application number: 25177258.8
(22) Date of filing: 19.05.2025
(51) Int. Cl.: F17C 13/00

(54) **METHOD AND APPARATUS FOR HEATING A FLOW OF HYDROGEN**

(30) Priority: 17.06.2024 GB 202408642
(71) Applicant: Rolls-Royce plc, London N1 9FX (GB)
(72) Inventor: Pathania, Rohit Singh, Derby, DE24 8BJ (GB); Ravikanti, Murthy V V S, Derby, DE24 8BJ (GB); Rimmer, John E, Derby, DE24 8BJ (GB)
(74) Representative: Rolls-Royce plc

(57) **Abstract**

Apparatus 200 for heating a flow of hydrogen includes (i) a tank 250 having a tank wall 210 and first region 220 containing a volume of incompressible fluid, the tank wall having a fluid input 252 and a fluid output 252 therein for establishing a flow of the incompressible fluid through the first region, (ii) an input conduit system 204 having one or more outputs 209A, B within the first region and (iii) an output conduit 224 coupling a second region 222 of the tank which is configured to collect gaseous hydrogen in operation of the apparatus to an apparatus output 226, the tank wall of the tank otherwise being closed. In operation of the apparatus, heat lost from the volume of incompressible fluid to hydrogen input to the apparatus is replaced by heat within incompressible fluid provided to the fluid input, thus maintaining the temperature of the body of incompressible fluid.

## Description

### TECHNICAL FIELD

The invention relates methods and apparatus for heating a flow of liquid hydrogen.

### BACKGROUND

Heating a flow of hydrogen is typically a key step prior to its combustion in a hydrogen-burning gas turbine engine or oxidation in a fuel cell stack. Depending on the fuel system within which heating is carried out, it may be required to vaporise, or complete vaporisation, of a flow of liquid hydrogen, either with or without an increase in temperature, or to raise the temperature of a flow of cold gaseous hydrogen. In a known apparatus, a portion of a flow of hydrogen input to the apparatus is separated from the remainder of the flow and combusted. The resulting combustion products and the remainder of the flow are provided to respective flow paths of a heat-exchanger in order to vaporise, or vaporise and raise the temperature of, the remainder of the flow. In use of such apparatus, inevitably some fuel has to be expended, which is disadvantageous. Furthermore, use of a heat-exchanger produces a significant weight penalty, potentially making such apparatus unsuitable for aerospace applications.

### BRIEF SUMMARY

The present invention provides apparatus for heating a flow of hydrogen, the apparatus including
(i) a tank having a tank wall and first region containing a volume of incompressible fluid, the tank wall having a fluid input and a fluid output therein for establishing a flow of the incompressible fluid through the first region;
(ii) an input conduit system passing through the tank wall and having an apparatus input external to the tank for receiving an input flow of hydrogen to be heated and one or more outputs within the first region; and
(iii) an output conduit coupling a second region of the tank which is configured to collect gaseous hydrogen in operation of the apparatus to an apparatus output, the tank wall of the tank otherwise being closed. The relatively high density of the incompressible fluid allows the apparatus to be smaller and lighter than the heat exchanger arrangement mentioned above. In operation of the apparatus, heat lost by the volume of incompressible fluid to hydrogen input to the apparatus is replaced by heat within incompressible fluid provided to the fluid input of the tank in order to maintain the volume of incompressible fluid within the first region at a temperature above that of the input flow of hydrogen.

The apparatus may further comprise one or more membrane elements or perforated plates separating the first and second regions within the tank, the input conduit system extending through the membrane elements or perforated plates and wherein the one or more membrane elements or perforated plates are permeable to gaseous hydrogen and impermeable to liquid hydrogen.

Alternatively, the apparatus may further comprise a membrane element or a perforated plate disposed within the output conduit, the membrane element or perforated plate being permeable to gaseous hydrogen and impermeable to liquid hydrogen.

A second aspect of the invention provides an aircraft comprising apparatus according to the first aspect. The apparatus comprised in the aircraft may be arranged to receive a heated flow of the incompressible fluid from elsewhere on the aircraft at the fluid input and to output the incompressible fluid at the fluid output. Alternatively, the apparatus may be arranged such that the tank of the apparatus is comprised in a circuit which includes the fluid input and the fluid output and which is arranged to circulate and heat the incompressible fluid.

A third aspect of the invention provides a method of heating a flow of hydrogen, the method comprising the steps of
(i) passing the flow of hydrogen into a body of incompressible fluid to vaporise and/or heat the flow of hydrogen;
(ii) establishing a flow of the incompressible fluid into and out of the body of incompressible fluid such that the temperature of the body of incompressible fluid remains above that of the flow of hydrogen; and
(iii) collecting gaseous hydrogen produced in step (i).

The flow may be a flow of liquid, gaseous or supercritical hydrogen. A portion of the incompressible fluid may be circulated into and out of the body of incompressible fluid and heated in order to maintain the temperature of the body of incompressible fluid.

### BRIEF DESCRIPTION OF THE DRAWINGS

Embodiments of the invention are described below by way of example only and with reference to the accompanying drawings in which:

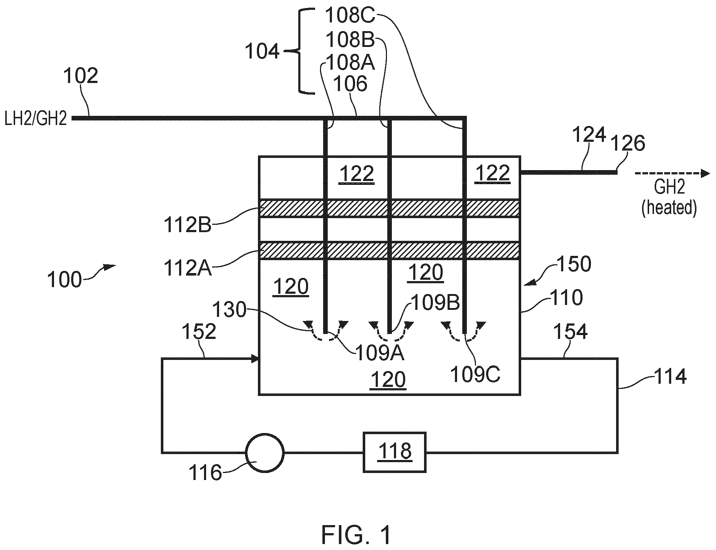

- Figures 1 to 3: show first to third example apparatus of the invention, respectively.

### DETAILED DESCRIPTION

Figure 1 shows a first example apparatus 100 of the invention. The apparatus 100 comprises a generally closed tank 150 having a tank wall 110. A first region 120 of the tank 150 contains a volume or body of incompressible fluid such as therminol, water-glycol mixture or oil. The tank wall 110 has a fluid input 152 and a fluid output 154, allowing a flow of the incompressible fluid to be established in the first region 120 of the tank 150. The first region 120 of the tank 150 is comprised in a circuit 114 which includes the fluid input 152, the fluid output 154, a pump 116 and a heater 118, allowing a portion of the incompressible fluid to be continuously circulated and heated within the circuit 114. First and second perforated plates 112A, 112B within the tank 150 separate the first and second regions 120, 122 of the tank 150, the second region 122 being arranged to collect gaseous hydrogen in operation of the apparatus 100. The perforated plates 112A, 112B are permeable to gaseous hydrogen but impermeable to liquid hydrogen. An output conduit 124 couples the second region 122 to an apparatus output 126.

The apparatus 100 further comprises an input conduit system 104 comprising an input line 106 having an apparatus input 102, external to the tank 150, for receiving an input flow of hydrogen to be heated, and three outputs 109A, 109B, 109C within the first region 120 containing the incompressible fluid. The apparatus input 102 is at one end of an input line 106 to which three branch lines 108A, 108B, 108C are coupled. The branch lines 108A, 108B, 108C each pass through the tank wall 110, the second region 122 and the perforated plates 112A, 112B and into the incompressible fluid within the first region 120. The ends of the branch lines 108A, 108B, 108C remote from the input line 106 form outputs 109A, 109B, 109C within the incompressible fluid. Other than positions at which the fluid input 152, the fluid output 154, the input conduit system 104 and the output conduit 124 pass through the tank wall 110, the tank 150 is closed.

In operation of the apparatus 100, a portion of the incompressible fluid is circulated and heated within the circuit 114 as an input flow of hydrogen to be heated is introduced into the apparatus input 102. The portion of incompressible fluid is heated to keep the temperature of the body of incompressible fluid within the first region 120 above that of the input flow of hydrogen. The input flow of hydrogen to be heated may be a flow of liquid, supercritical or gaseous hydrogen. The input flow exits the input conduit system 104 at the outputs 109A, 109B, 109C of the input conduit system 104 as indicated by arrows such as 130. In the case of liquid hydrogen being input at apparatus input 102, the liquid hydrogen is vaporised on emerging from outputs 109A, 109B, 109C, i.e. on contacting the incompressible fluid within the first region 120. For all types of input (i.e. liquid, gaseous or supercritical hydrogen), bubbles of gaseous hydrogen rise upwards through the incompressible fluid and are heated by contact with the incompressible fluid. Gaseous hydrogen passes through the perforated plates 112A, 112B and collects in the second region 122 of the tank 150. The gaseous hydrogen within the second region 122 is coupled to the output 126 via the output conduit 124. If the input flow of hydrogen at the apparatus input 102 is liquid hydrogen, a portion of the liquid hydrogen exiting the outputs 109A, 109B, 109B may in some circumstances not be vaporised within the incompressible fluid in the first region 120. In this case, the perforated plates 112A, 1121B prevent liquid hydrogen from entering the second region 122 of the tank 150.

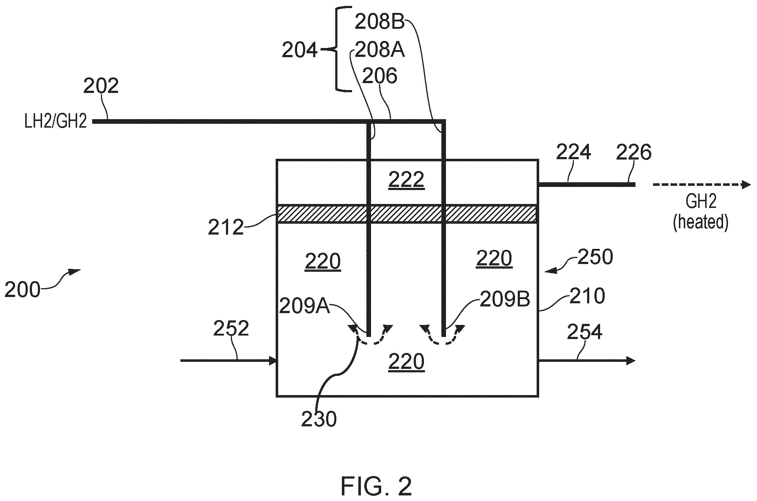

Figure 2, in which parts are labelled with reference numerals differing by 100 from those labelling corresponding parts in Figure 1, shows a second example apparatus 200 of the invention comprising a single perforated plate 212 and an input conduit system 204 having two outputs 209A, 209B within first region 220 of tank 250. In operation of the apparatus 200 a flow of incompressible fluid is established between fluid input 252 and fluid output 254. This flow is derived from a source external to the apparatus 200. Heat lost by the body of incompressible fluid within the first region 220 to hydrogen input to the apparatus is replaced by heat within a flow of incompressible fluid provided to the fluid input 252.

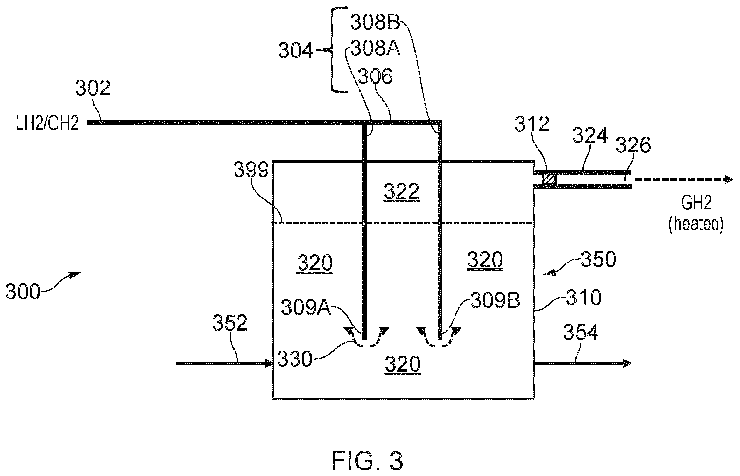

In variants of the apparatus 100, 200 the perforated plates 112A, 112B, 212 may be substituted by membranes performing the same function as the plates. In some variants, one or more plates or membrane elements within the tank of the apparatus are substituted by a plate or membrane element located within the output conduit of the apparatus. For example Figure 3 shows a variant apparatus 300 of the apparatus 200 of Figure 2; parts of the apparatus 300 are labelled with reference numerals differing by 100 from those labelling corresponding parts in Figure 2. Perforated plate 312 is located within output conduit 324 (which is shown enlarged compared to the output conduits 124, 224 in Figures 1 and 2 in order to show its interior). First and second regions 320, 322 within tank 350 are demarcated by surface 399 of incompressible fluid within the first region 320.

The apparatus 100, 200, 300 may each be comprised in an aircraft having one or more hydrogen-fuelled gas turbine engines arranged to receive gaseous hydrogen from the output 126, 226, 326 of the apparatus 100, 200, 300. In the case of the apparatus 200, 300, a flow of heated incompressible fluid (for example oil or water) may be obtained from a source elsewhere on the aircraft, provided to the fluid input 252, 352 and returned from the fluid output 254, 354, thus obviating the need for a pump and a heater (116, 118 in Figure 1) and saving weight.

Various examples have been described, each of which comprise one or more combinations of features. Except where clearly mutually exclusive, any of the features may be employed separately or in combination with any other features and the invention extends to and includes all combinations and sub-combinations of one or more features described above.

## Claims

1. Apparatus (100; 200; 300) for heating a flow of hydrogen, the apparatus including
(i) a tank (150; 250; 350) having a tank wall (110; 210; 310) and first region (120; 220; 320) containing a volume of incompressible fluid, the tank wall having a fluid input (152; 252; 352) and a fluid output (154; 254; 354) therein for establishing a flow of the incompressible fluid through the first region;
(ii) an input conduit system (104; 204; 304) passing through the tank wall and having an apparatus input (102; 202; 302) external to the tank for receiving an input flow of hydrogen to be heated and one or more outputs (109ABC; 209AB; 309AB) within the first region; and
(iii) an output conduit (124; 224; 324) coupling a second region (122; 222; 322) of the tank which is configured to collect gaseous hydrogen in operation of the apparatus to an apparatus output (126; 226; 326),
the tank wall of the tank otherwise being closed.

2. Apparatus (100; 200) according to claim 1 further comprising one or more membrane elements or perforated plates (112A, 112B; 212) separating the first and second regions within the tank, the input conduit system extending through the membrane elements or perforated plates and wherein the one or more membrane elements or perforated plates are permeable to gaseous hydrogen and impermeable to liquid hydrogen.

3. Apparatus (300) according to claim 1 further comprising a membrane element or a perforated plate (312) disposed within the output conduit, wherein the membrane element or perforated plate is permeable to gaseous hydrogen and impermeable to liquid hydrogen.

4. An aircraft comprising apparatus (100; 200; 300) according to any of claims 1 to 3.

5. An aircraft according to claim 4 wherein the apparatus (200; 300) is arranged to receive a heated flow of the incompressible fluid from elsewhere on the aircraft at the fluid input (252; 352) and to output the incompressible fluid at the fluid output (254; 354).

6. An aircraft according to claim 4 or apparatus (100) according to any of claims 1 to 3 wherein the first region (120) of the tank is comprised in a circuit (114) which includes the fluid input (152) and the fluid output (154) and which is arranged to circulate and heat the incompressible fluid.

7. A method of heating a flow of hydrogen, the method comprising the steps of
(i) passing the flow of hydrogen into a body of incompressible fluid to vaporise and/or heat the flow of hydrogen;
(ii) establishing a flow of the incompressible fluid into and out of the body of incompressible fluid such that the temperature of the body of incompressible fluid remains above that of the flow of hydrogen; and
(iii) collecting gaseous hydrogen produced in step (i).

8. A method according to claim 7 wherein the flow of hydrogen is a flow of liquid, gaseous hydrogen or supercritical hydrogen.

9. A method according to claim 7 or claim 8 and comprising the step of circulating a portion of the incompressible fluid into and out of the body of incompressible fluid and heating the portion in order to maintain the temperature of the body of incompressible fluid.
